(19) Europäisches Patentamt

European Patent Office

Office européen des brevets

(11) **EP 2 130 439 B1**

(12) **EUROPEAN PATENT SPECIFICATION**

| | |
|---|---|
| (45) Date of publication and mention<br>of the grant of the patent:<br>**10.04.2013 Bulletin 2013/15** | (51) Int Cl.:<br>***A23G 9/48*** *(2006.01)* |

(21) Application number: **09160070.0**

(22) Date of filing: **12.05.2009**

(54) **Frozen Confection**

Gefrorene Süßwaren

Confection surgelée

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **05.06.2008 EP 08157624**

(43) Date of publication of application:
**09.12.2009 Bulletin 2009/50**

(73) Proprietors:
• **Unilever PLC
London
EC4Y 0DY (GB)**
Designated Contracting States:
**CY GB IE MT**
• **Unilever N.V.
3013 AL Rotterdam (NL)**
Designated Contracting States:
**AT BE BG CH CZ DE DK EE ES FI FR GR HR HU
IS IT LI LT LU LV MC MK NL NO PL PT RO SE SI
SK TR**

(72) Inventors:
• **Lacy, Ian, David
Bedford, Bedfordshire MK44 1LQ (GB)**
• **Prime, Blake, Michael
Bedford, Bedfordshire MK44 1LQ (GB)**

(74) Representative: **Hugot, Alain et al
Unilever PLC, Unilever Patent Group
Colworth House
Sharnbrook
Bedford
Bedfordshire MK44 1LQ (GB)**

(56) References cited:
**EP-A- 1 348 342        EP-A- 1 597 974
WO-A-93/21776        WO-A-98/37770
WO-A-2006/007922        WO-A-2006/007923
US-A- 4 310 559**

## Description

### Field of the invention

The present invention relates to frozen confections, in particular frozen confections that have a translucent appearance.

### Background to the invention

Frozen confections such as ice creams, water ices, fruit ices, milk ices and the like are popular products. Frozen confections are often provided as individual portions on a stick or in a tube. In order to provide continuing consumer appeal, there is a need for frozen confections which have new and / or unusual appearance.

WO 93/21776 discloses an ice lolly at least part of which is transparent and in a non-crystalline, glassy state. This is achieved by forming the transparent part from a highly concentrated sugar solution, such as 70 - 80 wt% sucrose and / or glucose. However, parents are concerned about damage to their children's teeth as a result of consuming foods which contain sugars. Moreover, there is an increasing demand for products that help to reduce or control daily caloric intake and in particular for products that do not contain high amounts of sugar. Thus there remains a need for alternative methods of producing frozen confections with an unusual appearance which provides consumer appeal.

WO97/04663 discloses a frozen confection product comprising 10-75% ice particles having a mean of preferably 2-10 mm. The frozen confection is extruded, wherein the typical extrudate has a circular cross section diameter of 5 mm and a length of 10 mm, thus the product has a vertical thickness of 5 mm and a horizontal thickness of 10 mm and the average ice-crystal size of the ice-crystals in the water-ice bodies is preferably less than 100 micron. It is also mentioned that ice particles contain 1-50% solids and that lower solids contents, such as 1-15% are possible.

### Summary of the invention

We have now found that frozen confections having an unusual and attractive appearance can be produced by incorporating transparent ice particles of a certain size relative to the thickness of the frozen confection. Accordingly, the present invention provides a frozen confection product having a thickness of from 10mm to less than 40mm, and comprising from 25 to 70 wt% of transparent ice particles having a mean size of from 2 to 30 mm and wherein the ice particles are formed from degassed and demineralised water. The resulting frozen confections have a translucent appearance.

Preferably the solids content of the ice particles is less than 0.5 wt%, more preferably the ice particles are pure degassed and demineralized ice.

Preferably the frozen confection has a thickness of less than 30mm, more preferably less than 25mm:

Preferably the particles have a mean size of from 3 to 20mm, more preferably from 4 to 10mm, most preferably from 5 to 7mm.

Preferably the mean size of the particles is from 25 to 75% of the thickness of the product.

Preferably the amount of ice particles is from 35 to 65% by weight of the frozen confection, more preferably greater than 45%.

Preferably the frozen confection is unaerated.

In a second aspect, the present invention provides a process for producing a frozen confection according to the first aspect of the invention, the process comprising:

a) preparing a dispersion comprising: 25% to 70% by weight of transparent ice particles having a mean size of from 2 to 30mm and formed from degassed and demineralised water ; and 75% to 30% by weight of a mix;

b) cooling the dispersion to below -10°C in a mould to form a product having a thickness of less than 40mm.

### Detailed Description of the Invention

Unless defined otherwise, all technical and scientific terms used herein have the same meaning as commonly understood by one of ordinary skill in the art (e.g. in frozen confectionery manufacture). Definitions and descriptions of various terms and techniques used in frozen confectionery manufacture are found in "Ice Cream", 6th Edition, Marshall, Goff and Hartel (2003), Kluwer Academic/Plenum Publishers. All percentages, unless otherwise stated, refer to the percentage by weight, with the exception of percentages cited in relation to the overrun.

Frozen confections are sweet-tasting fabricated foodstuffs intended for consumption in the frozen state. Frozen confections typically contain, in addition to water, ingredients such as sugars (e.g. dextrose, fructose, sucrose, lactose, corn syrups and sugar alcohols such as sorbitol, or glycerol); fat (e.g. milk fat, coconut oil, palm oil, sunflower oil); fruit (e.g. in the form of juice or puree); proteins (e.g. milk protein or soy protein); colours, flavours, acidifying agents, emulsifiers (e.g. mono-/di-glycerides) and stabilizers (e.g. locust bean gum, guar gum agar, alginate, carrageenan, pectin, carboxymethyl cellulose or xanthan).

Frozen confections of the invention may be aerated or unaerated. Preferably the frozen confections are unaerated, by which is meant that the frozen confection has an overrun of less then 20%, more preferably less than 10%. An unaerated frozen confection is not subjected to deliberate steps such as whipping to increase the gas content. Nonetheless, it will be appreciated that during the preparation of unaerated frozen confections, low levels of gas, such as air, may be incorporated in the product. Overrun is measured at atmospheric pressure and is defined as on p143 of "Ice Cream" 6th Edition.

The frozen confection products of the invention are preferably individual portions. In a preferred embodiment, the frozen confection is a stick product, i.e. a product intended to be hand-held by means of a stick positioned within the product. In another embodiment, the frozen confection is contained in a tube made from a flexible material and having an openable end, so that when the tube is squeezed, the rigid frozen confection is pushed out through the opening and can be consumed. In yet another embodiment the frozen confection is contained in a pouch (preferably a transparent pouch). The product is extruded through an opening by squeezing the pouch.

The frozen confection products of the invention have a thickness of less than 40mm, preferably less than 30mm, for example 15-25 mm. This thickness is typical of conventional ice lolly stick products. By thickness is meant the size of the product measured in its shortest dimension. For example, stick products are typically approximately cuboidal objects of approximately 100mm (length) by 50mm (breadth) by 20mm (thickness). Moulded frozen confections typically taper slightly (e.g. from the end in which a stick is present) in order to aid mould release. Tube products are also often tapered in order to aid removal from the tube during consumption. In this case, the thickness is taken as the mean or typical thickness of the product.

The ice particles substantially consist of ice. They have a low solids content, preferably less than 1%. The ice particles are ice formed from degassed and demineralised water. In another embodiment a small amount of solids is present, such as less than 0.5 wt%, preferably less than 0.1 wt%, so that, for example, the ice particles can be flavoured. The total solids content is the dry weight, i.e. the sum of the weights of all the ingredients other than water, expressed as a percentage of the total weight. It is measured as described in Ice Cream, 6th Edition, p296.

The ice particles are transparent, i.e. they are optically clear. Transparent particles can be produced by preventing minute gas bubbles from forming inside the ice particle during freezing. This can be achieved for example by using de-gassed water to create the ice particles, or by successively freezing thin layers of water, so that dissolved gas can escape as the ice is formed. Commercially available apparatus for producing clear ice cubes (such as the Scotsman AC106 ice maker) typically uses this method. Best results are achieved when degassed and demineralised water is used.

The size of the ice particles is preferably a substantial proportion of the thickness of the frozen confection product. We have found that this results in increased translucency and improved appearance of the product. However, the particle size should not be larger than the thickness of the product since in this case the particles may not fit easily into the moulds or tubes typically used for producing stick products or tube products respectively. The particles have a mean size of at least 2mm, preferably at least 3mm, more preferably at least 4 or 5mm; and at most 30mm, preferably at most 20mm, more preferably at most 10 or 7mm. The frozen confection product has a thickness of less than 40mm, typically 15-25mm. Thus, the size of the particles is in the range of from about 25 to 75% of the thickness of the product. In one embodiment, the product is tapered, so that it is narrower at its edges than at the centre. In this case, the particle size may be similar to the thickness of the product at the edge. This results in products which may have particles at or close to the edge which constitute essentially the whole thickness of the product. These have a particularly interesting appearance with very high translucency at the edges.

Ice particles are 3-dimensional objects, often of an irregular shape. However, methods for viewing and measuring such particles are often 2-dimensional (see below). Consequently, measurements are often made solely in one or two dimensions and converted to the required measurement. The size of a particle can be calculated from an area size measurement by assuming a regular shape for the particle and calculating the size or volume on that basis. By "area size", we mean the maximum area as seen in the image plane (i.e. when viewed using optical imaging). Typically, the assumed regular shape is a sphere and therefore the size is $2 \times \sqrt{\text{area size}/\pi}$. The frozen particle size distribution of a frozen product can be measured as follows.

All equipment, reagents and products used in sample preparation are equilibrated to the measurement temperature (-10°C) for at least 10 hours prior to use. A 10 g sample of the frozen confection is taken and added to 50 cm³ of a dispersing solution consisting of 20% ethanol in aqueous solution, and gently agitated for 30s or until the sample has completely dispersed into single particles. The aqueous ethanol dispersing solution can be designed to match the measurement conditions of the experimental system: see 'Concentration properties of aqueous solutions: conversion tables' in "Handbook of Chemistry and Physics", CRC Press, Boca Raton, Florida, USA. The whole ice / ethanol / water mix is then gently poured into a 14 cm diameter Petri dish, ensuring complete transfer, and again gently agitated to ensure even dispersal of the ice particles in the dish. After 2 s (to allow for cessation of particle movement) an image is captured of the full dish. Ten replicate samples are taken for each product.

Images can be acquired using a domestic digital camera (e.g. JVC KY55B) with its macro-lens assembly as supplied. The camera is selected to provide sufficient magnification to reliably image particles with an area size from 0.5 mm$^2$ to greater than 50 mm$^2$. For imaging, the Petri dish containing the sample is placed on a black background and illuminated at low angle (Schott KL2500 LCD) to enable the ice particles to be easily visualised as bright objects.

Image analysis is conducted using the Carl Zeiss Vision KS400 Image analysis software (Imaging Associates Ltd, 6 Avonbury Business Park, Howes Lane, Bicester, OX26 2UA) to determine the area size of each particle in the image. User intervention is required to remove from the image: the edge of the Petri dish, air bubbles, coincidentally connected ice particles and any residual undispersed material. Of these features, only the apparent connection between ice particles is relatively frequent. Preferably at least 500, and typically several thousand, particles are sized for each product characterised. From this image analysis it is possible to calculate the range and mean of the diameters of the ice particles.

Ice particles of the desired size can be produced by crushing large ice pieces (such as ice cubes) and then sieving the crushed ice if required. Alternatively, particles could be produced by freezing using moulds of the desired size.

The ice particles are added in an amount such that they constitute at least 25%, preferably at least 35%, more preferably at least 45% by weight of the frozen confection, for example about 50 to 60%. We have found that these amounts of ice particles provide the desired translucent appearance. The ice particles are added in an amount of at most 70%, preferably at most 65%. We have found that it is difficult to obtain a product in which the ice particles are evenly distributed when the ice particles are added in amounts above this level.

Frozen confections may be produced by mixing the ice particles into a mix of the remaining ingredients (water, sugars, proteins, fat, colours, flavours, emulsifiers, stabilsers etc.) to form a slurry or dispersion. The mix may simply be a chilled liquid (so as not to melt the ice particles), or the mix may be cooled or partially frozen beforehand, typically in a conventional ice cream freezer (a scraped-surface heat exchanger). By partial freezing, it is meant that part, but not all, of the water in the mix is frozen into small ice crystals, typically 50 $\mu$m in size.

The dispersion of ice particles in the mix is subjected to a freezing step, for example in a refrigerated mould of the required size, to produce the frozen confection product. Sticks may be inserted during this step. Such methods are well known to those skilled in the art.

The frozen confection of the invention may constitute an entire product or may be a component of a composite product. In a composite product the frozen confection provides contrast in appearance to the other component(s) of the product. Preferably such composite products contain the frozen confection as one or more discrete elements in their structure. For example, an ice lolly could consist of a bottom half (into which the stick is inserted) which is a conventional frozen confection and a top half which is a frozen confection according to the invention.

The frozen confection may additionally contain inclusions, such as pieces of fruit, nut, chocolate, biscuit, toffee etc.. The translucent nature of the frozen confection can help to enhance the visibility of such pieces (compared with conventional, opaque frozen confections), and thereby increase consumer appeal.

The invention will now be further described with reference to the following examples, which are illustrative only and non-limiting, and the figures wherein:

Figure 1 shows photographs of ice lollies made with (a) 1 - 2mm ice particles and (b) 2 - 8mm ice particles.

Figure 2 shows photographs of ice lollies made with (a) 25 wt% ice particles and (b) 65 wt% ice particles.

## EXAMPLES

Example 1

Water ice mixes were prepared according to the formulation shown in Table 1.

Table 1

| Ingredient (wt%) | Mix | Final product |
|---|---|---|
| Sucrose | 20 | 10 |
| Locust bean gum | 0.3 | 0.15 |
| Citric acid | 0.5 | 0.25 |
| Lime Flavour | 0.2 | 0.1 |
| Water | To 100 | To 100 |

The mix was prepared by heating the water to 81°C and then mixing in the sucrose and LBG. The mixture was stirred for 20 minutes and cooled to 5°C. Water lost through evaporation was compensated for, and the citric acid and flavour was then added.

Transparent ice cubes (i.e. not containing gas bubbles) were made using a Scotsman AC106 ice maker. The ice cubes were cooled to -25°C and then crushed using a Scotsman Crushman 360, which resulted in a distribution of ice particle sizes. The particles were then sieved to obtain ice particles of narrower size ranges, namely 1-2 mm, 2-5 mm or 2-8 mm (a new batch of ice cubes was crushed to produce each size range).

The sieved ice particles (at -25 °C) were added into the chilled mix (+5°C) so that they made up 50% by weight of the final product (which has the composition also shown in table 1). The particles were stirred in by hand using a pallet knife until a uniform dispersion was obtained. This slurry of ice particles was then poured into lolly moulds held at -23 °C in a glycol bath. The moulds had dimensions of 104 x 47 x 19mm and were obtained from WCB Ice Cream (Graham Bells Vej 6, DK-8200, Aarhus N, Denmark), model number 5166. This type of mould was chosen due to its simple rectangular shape, being free of motifs or indentations on the surface that could complicate the measurement of opacity. A wooden stick was inserted into each lolly. Once frozen, the mould was placed in a bath of warm water so as to release the product.

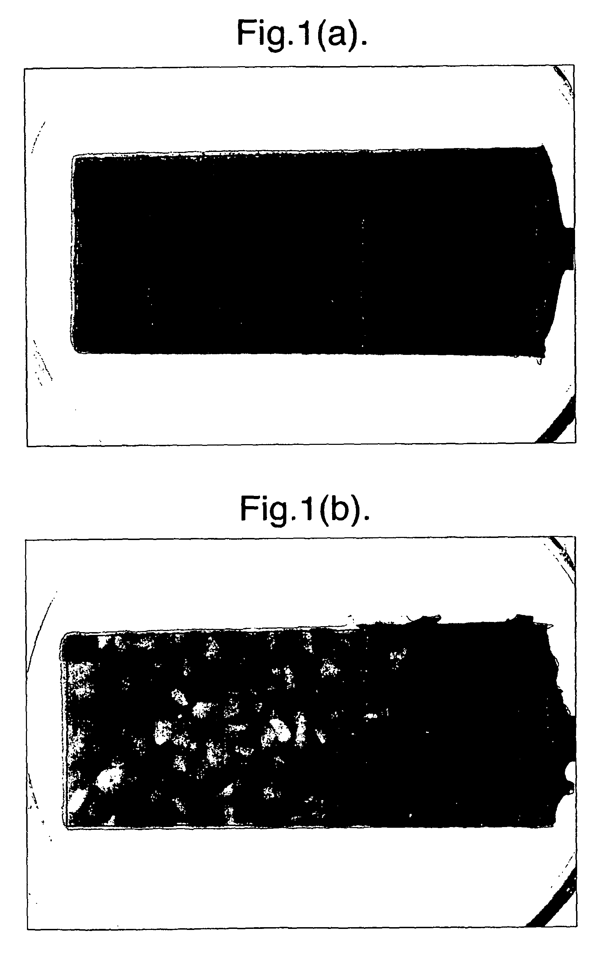

Figure 1 shows photographs of the resulting ice lollies for the 1-2mm and 2-8mm ice particles. It can be seen that the larger ice particles produce a more translucent product.

Example 2

A series of mixes, shown in Table 2, were prepared as described in example 1. Ice particles (2-8mm) produced as described in example 1 were combined with the mixes in amounts from 25 to 65% (by weight of the final product). Each mix was formulated so that the composition of the final product was the same as in Example 1. Ice lollies were produced as described in example 1.

Table 2

| Added ice Ingredient (wt%) | 25% | 40% | 50% | 65% |
|---|---|---|---|---|
| Sucrose | 13.33 | 16.67 | 20 | 28.57 |
| LBG | 0.20 | 0.25 | 0.3 | 0.43 |
| Citric Acid | 0.33 | 0.42 | 0.5 | 0.71 |
| Lime Flavour | 0.13 | 0.17 | 0.2 | 0.29 |
| Water | To 100 | To 100 | To 100 | To 100 |

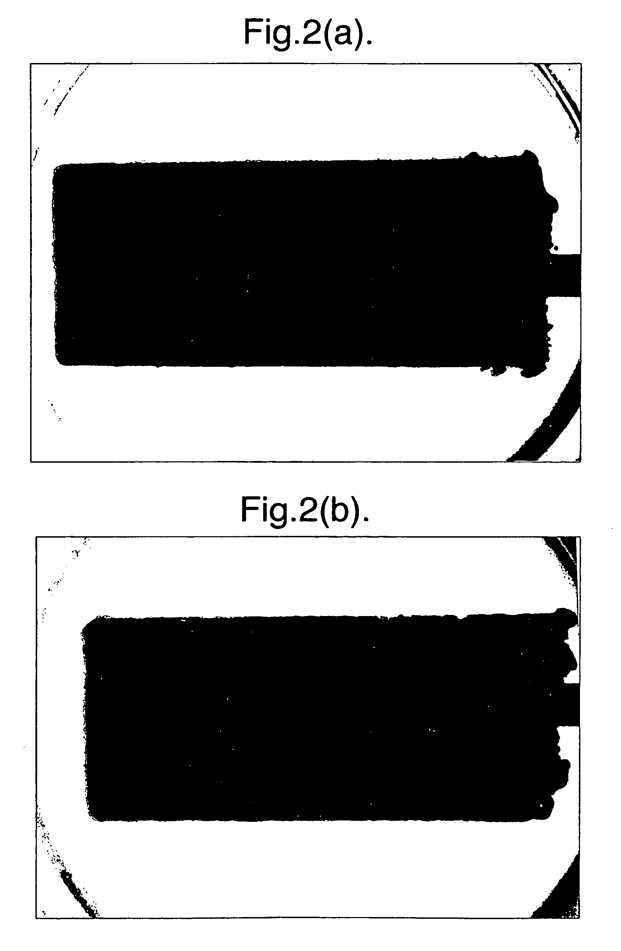

Figure 2 shows photographs of the resulting ice lollies for 25% and 65% ice particles. It can be seen that the larger amount of ice particles produced a more translucent product.

Example 3

A mix having the composition given in Table 3 was produced by heating water to 85 °C and then mixing in the sucrose and LBG. The mixture was stirred for 25 minutes and then cooled to 5°C. Water lost through evaporation was compensated for, and the citric acid and flavour was then added.

Table 3

| Ingredient (wt%) | Mix | Final product |
|---|---|---|
| Fructose | 27.5 | 11 |
| Locust bean gum | 0.375 | 0.15 |
| Citric acid | 0.625 | 0.25 |
| Raspberry Flavour | 0.375 | 0.15 |
| Raspberry Pieces | 0 | 10 |
| Water | To 100 | To 100 |

Ice particles were produced as described in example 1 (2-8mm size range). The sieved ice particles (at -25 °C) were added into the chilled mix (+5°C) so that they made up 50% by weight of the final product. The particles were stirred in by hand using a pallet knife until a uniform dispersion was obtained. Frozen raspberry crumb pieces (2-4mm in size) at -25°C were then added so that they made 10% by weight of the final product (which has the composition shown in table 3). The raspberry pieces were mixed into the ice crystal dispersion by hand using a pallet knife. The mixture was then used to produce ice lollies as described in example 1. The lollies were translucent as a result of the presence of the clear ice particles. The translucency also helped to accentuate the presence and visual appeal of the fruit pieces.

Example 4

A mix having the composition given in Table 4 was prepared as described in example 1.

Table 4

| Ingredient (wt%) | Mix | Final product |
| --- | --- | --- |
| Fructose | 22 | 11 |
| Locust bean gum | 0.3 | 0.15 |
| Citric acid | 0.5 | 0.25 |
| Water | To 100 | To 100 |

The mix was passed through a standard ice cream freezer (Crepaco W04) at a flow rate of 75 litres/hr and an extrusion temperature of -1.8°C. At this temperature, the mix contained little (if any) ice. The cooled mix was pumped to a fruit feeder (Hoyer FF4000) which was used to feed in ice particles (at -25 °C) produced as described in example 1, but without any sieving. The absence of a sieving step resulted in a broader distribution of particle sizes, with 80 wt% of the particles being in the range of 2-9.5mm. The ice particles were added to a level of 50% by weight of the final product. The resulting ice slurry was frozen in ice lolly moulds as described in example 1. The resulting ice lollies were translucent as a result of the presence of the clear ice particles.

Example 5

Four sets of water ice products were made: two products containing transparent ice particles (Examples 5A and 5B), a product containing normal (opaque) ice particles (Example 5C) and a comparative (standard) quiescently frozen product (Example 5D). The composition of each of these products was identical, as given in Table 5. In each case, the product was produced from a mix to which ice particles or water was added. The composition of the mix is also given in Table 5.

Table 5

| Ingredient | Final product / wt% | MIx / wt% |
| --- | --- | --- |
| Fructose | 13.75 | 27.50 |
| LBG | 0.19 | 0.38 |
| Citric Acid | 0.31 | 0.63 |
| Water | 85.56 | 71.50 |

The mix was prepared by heating the water to 81°C and then mixing in the sucrose and LBG. The mixture was stirred for 20 minutes and cooled to 5°C. Water lost through evaporation was compensated for, and the citric acid was then added. Ice lolly products were formed for each example as described in example 1.

*Example 5A: transparent ice particles*

Transparent ice cubes were made using a Scotsman AC106 ice maker. The ice cubes were cooled to -25°C and then crushed using a Scotsman Crushman 360, which resulted in a wide distribution of ice particle sizes. The particles were then sieved to obtain ice particles of a narrower size range, namely 2-8 mm. The sieved ice particles (at -25 °C) were added into the chilled mix (at -5 °C) so that they made up 50% by weight of the final product (which has the composition shown in Table 1). The particles were stirred in by hand using a pallet knife until a uniform dispersion was obtained. This slurry of ice particles was then poured into the lolly moulds which were subsequently immersed in a glycol bath held at a -16.4°C. A wooden stick was inserted into each lolly. Once frozen, the moulds were placed in a bath of warm water so as to release the product. They were then wrapped and placed into storage at -25°C for 1 day.

*Example 5B: transparent ice particles*

A Ziegra ice machine (UBE1500, Ziegra Eismaschinen GMBH, Isernhagen, Germany) was used to produce large (approximately 8 x 6mm) chunks of ice (at a temperature of approx -1°C) via an auger type system. Demineralized, de-gassed water was used as the input to the ice machine, resulting in the production of ice particles that were transparent (although not quite as clear as the particles produced by the Scotsman ice maker in example 5A). The ice particles were combined with the mix at 50/50 by weight. The temperature of the mix was +5.4°C prior to addition of ice. The mix and ice was mixed together quickly in a jug and poured into the lolly moulds, which were subsequently immersed into a glycol bath held at -16.4°C. Sticks were inserted into the products and allowed to freeze for 20 minutes. The products were demoulded by immersing the mould into warm water (40°C) briefly and pulling the products out by hand. They were then wrapped and placed into storage at -25°C for 1 day.

*Example 5C: standard ice particles*

Example 5B was repeated except that ordinary mains water was used as the input to the Ziegra ice machine (i.e. it was neither degassed nor demineralised). The resulting ice particles were white and opaque in appearance, i.e. not transparent. This is due to the presence of entrapped gas and solutes within the ice as a consequence of the freezing process.

*Example 5D: standard quiescent lolly (i.e. without ice particles)*

The mix was diluted 50/50 by weight with water and then chilled to a temperature of - 1.4°C. This formed a small quantity of ice in the solution, which was dispersed using a hand stirrer to form a fine slush. This technique of pre-chilling an ice lolly mixture is commonly used in industrial manufacture so as to speed up the moulding / freezing step in the process. This fine slush was then poured into the mould and placed into a glycol tank with a measured temperature of -16.4°C. Sticks were inserted into the products and the mix was allowed to freeze for 20 minutes. The products were demoulded by immersing the mould into warm water (40°C) briefly and pulling the products out by hand. They were then wrapped and placed into storage at -25°C for 1 day.

*Measurement of Opacity*

The opacity of the products was measured as follows. Each ice lolly was held at -18°C for several hours before measurement, to ensure that a constant measurement temperature was used. The product was placed on a glass cell kept cool by a glycol bath operating at -16°C. A light box consisting of a fluorescent bulb contained in a perspex box (commonly available from photographic suppliers), was used to illuminate the ice lolly from underneath. A colour camera (JVC KY55B) fitted with a macro lens was used to take pictures of the backlit ice lolly (automatic shutter speed or white balance settings were disabled so that the camera response to light stayed constant irrespective of the intensity of light transmitted through the ice lolly). Images of the 'background' were also taken (i.e. the light box without any product). The images were captured using a computer program (KY LINK). 10 ice lollies of each variant were used for the measurement. Both sides of each lolly were imaged so as to remove any inaccuracies that could be caused by the ice particles being unevenly distributed through the thickness of the lolly.

The opacity of each ice lolly was obtained as follows. Two images are needed: the ice lolly against a lit background and the lit background itself providing the reference light level. The two images must be acquired with the same camera settings. Since the camera used obtains colour images, the intensity of the green channel was used to compute the opacity. A hand-drawn mask was used to limit the measurements to pixels inside the ice lolly and well away from the stick (see Figures 1 and 2). The opacity $O(x,y)$ for a pixel at location $(x,y)$ in the image is defined as:

$$O(x, y) = -\ln \frac{I_{\text{lolly}}(x, y)}{I_{\text{reference}}(x, y)}$$

The finally opacity $O_{lolly}$ is calculated by taking the mean of the values of $O(x,y)$ from all pixels within the mask.

$$O_{lolly} = \frac{\sum\limits_{(x,y)\,\text{in mask}} O(x, y)}{\#\,\text{pixels in mask}}$$

A translucent lolly has a low opacity, and an opaque lolly has a high opacity. The opacity measurements of examples 5A, 5B, 5C and 5D are given in Table 6. The order of opacity was 5A < 5B < 5C < 5D. This was also apparent when simply viewing the products by eye. Thus products containing transparent ice particles have a significantly lower opacity, i.e. they are substantially more translucent than conventional quiescently frozen products.

Table 6

| Example | Mean Opacity | Error bar ($\pm$ 1 standard deviation) |
|---------|--------------|-----------------------------------------|
| 5A | 0.83 | 0.02 |
| 5B | 0.92 | 0.02 |
| 5C | 1.05 | 0.02 |
| 5D | 1.16 | 0.03 |

The various features and embodiments of the present invention, referred to in individual sections above apply, as appropriate, to other sections, *mutatis mutandis*. Consequently features specified in one section may be combined with features specified in other sections, as appropriate. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the following claims.

**Claims**

1. A frozen confection product having a thickness of from 10mm to less than 40mm, and comprising from 25 to 70 wt% of transparent ice particles having a mean size of from 2 to 30 mm and wherein the ice particles are formed from degassed and demineralised water.

2. A frozen confection product according to claim 1 having a thickness of from 10mm to 30mm.

3. A frozen confection product according to claim 1 or claim 2 wherein the ice particles have a total solids content of less than 0.5 wt%.

4. A frozen confection product according to any of claims 1 to 3 wherein the ice particles have a mean size of from 3 to 20mm.

5. A frozen confection product according to any of claims 1 to 4 wherein the mean size of the ice particles is from 25 to 75% of the thickness of the product.

6. A frozen confection product according to any of claims 1 to 5 wherein the amount of ice particles is from 35 to 65% by weight of the frozen confection.

7. A frozen confection product according to any of claims 1 to 6 which is unaerated.

8. A process for producing a frozen confection according to any of claims 1 to 7, the process comprising:

   a) preparing a dispersion comprising: 25% to 70% by weight of transparent ice particles having a mean size of from 2 to 30mm and formed from degassed and demineralised water; and 75% to 30% by weight of a mix;
   b) cooling the dispersion to below -10°C in a mould to form a product having a thickness of from 10mm to less than 40mm.

**Patentansprüche**

1. Gefrorenes Konfektprodukt, das eine Dicke von 10 mm bis weniger als 40 mm hat und 25 bis 70 Gew.-% transparente Eisteilchen mit einer mittleren Größe von 2 bis 30 mm aufweist und wobei die Eispartikel aus entgastem und demineralisiertem Wasser erzeugt sind.

2. Gefrorenes Konfektprodukt nach Anspruch 1,
   das eine Dicke von 10 mm bis 30 mm aufweist.

3. Gefrorenes Konfektprodukt nach Anspruch 1 oder Anspruch 2,
   wobei die Eisteilchen einen gesamten Feststoffgehalt von weniger als 0,5 Gew.-% aufweisen.

4. Gefrorenes Konfektprodukt nach einem der Ansprüche 1 bis 3,
   wobei die Eisteilchen eine mittlere Größe von 3 bis 20 mm aufweisen.

5. Gefrorenes Konfektprodukt nach einem der Ansprüche 1 bis 4,
   wobei die mittlere Größe der Eisteilchen 25 bis 75 % der Dicke des Produktes ausmacht.

6. Gefrorenes Konfektprodukt nach einem der Ansprüche 1 bis 5,
   wobei die Menge der Eisteilchen 35 bis 65 Gew.-% des gefrorenen Konfekts ausmacht.

7. Gefrorenes Konfektprodukt nach einem der Ansprüche 1 bis 6,
   das nicht mit Luft versetzt ist.

8. Verfahren zum Herstellen eines gefrorenen Konfekts nach einem der Ansprüche 1 bis 7,
   wobei das Verfahren Folgendes aufweist:

   a) Herstellen einer Dispersion, die Folgendes aufweist: 25 bis 70 Gew.-% transparente Eisteilchen, die eine mittlere Größe von 2 bis 30 mm haben und aus entgastem und demineralisiertem Wasser hergestellt sind; und 75 bis 30 Gew.-% eines Gemischs;
   b) Abkühlen des Dispersion unter -10 °C in einer Form, um ein Produkt mit einer Dicke von 10 mm bis weniger als 40 mm zu erzeugen.

**Revendications**

1. Produit de type friandise congelée ayant une épaisseur de 10 mm à moins de 40 mm, et comprenant de 25 à 70 % en poids de particules de glace transparentes ayant une taille moyenne de 2 à 30 mm et dans lequel les particules de glace sont formées à partir d'eau dégazée et déminéralisée.

2. Produit de type friandise congelée selon la revendication 1 ayant une épaisseur de 10 à 30 mm.

3. Produit de type friandise congelée selon la revendication 1 ou la revendication 2 dans lequel les particules de glace ont une teneur en solides totale inférieure à 0,5 % en poids.

**4.** Produit de type friandise congelée selon l'une quelconque des revendications 1 à 3 dans lequel les particules de glace ont une taille moyenne de 3 à 20 mm.

**5.** Produit de type friandise congelée selon l'une quelconque des revendications 1 à 4 dans lequel la taille moyenne des particules de glace est de 25 à 75 % de l'épaisseur du produit.

**6.** Produit de type friandise congelée selon l'une quelconque des revendications 1 à 5 dans lequel la quantité de particules de glace est de 35 à 65 % en poids de la friandise congelée.

**7.** Produit de type friandise congelée selon l'une quelconque des revendications 1 à 6 qui est non aéré.

**8.** Procédé de production d'une friandise congelée selon l'une quelconque des revendications 1 à 7, le procédé comprenant :

a) la préparation d'une dispersion comprenant : 25 à 70 % en poids de particules de glace transparentes ayant une taille moyenne de 2 à 30 mm et formées à partir d'eau dégazée et déminéralisée ; et 75 à 30 % en poids d'un mélange ;
b) le refroidissement de la dispersion au-dessous de -10 °C dans un moule pour former un produit ayant une épaisseur de 10 mm à moins de 40 mm.

## Fig.1(a).

## Fig.1(b).

## Fig.2(a).

## Fig.2(b).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9321776 A

- WO 9704663 A

**Non-patent literature cited in the description**

- **MARSHALL ; GOFF ; HARTEL.** Ice Cream. Kluwer Academic/Plenum Publishers, 2003
- Ice Cream. 143
- Ice Cream. 296

- Concentration properties of aqueous solutions: conversion tables. Handbook of Chemistry and Physics. CRC Press